# EUROPÄISCHE PATENTANMELDUNG

(11) **EP 1 111 252 A2**
(43) Veröffentlichungstag der Anmeldung: **27.06.2001**
(21) Anmeldenummer: 00127897.7
(22) Anmeldetag: 20.12.2000
(51) Int. Cl.: F16B 5/02

(54) **Befestigerzusammensetzung**

(30) Priorität: 20.12.1999 DE 19961889
(71) Anmelder: TEXTRON Verbindungstechnik GmbH & Co. oHG, 56567 Neuwied (DE)
(72) Erfinder: Jucknath, Peter, 56587 Oberraden (DE)
(74) Vertreter: Mahler, Peter, Dipl.-Phys.

(57) **Zusammenfassung**

Die Erfindung betrifft eine Befestigerzusammensetzung zum Verbinden eines ersten Werkstückes **8** mit einer Bohrung mit einem zweiten Werkstück **9** mit einer Bohrung, insbesondere einer Gewindebohrung, wobei die Befestigerzusammensetzung eine Schraube **1** umfaßt, die einen Kopf und einen Schaft aufweist, wobei der Schaft einen gewindelosen oberen Schaftabschnitt **4** und einen unteren Schaftabschnitt **5** mit einem Gewinde **5a** aufweist und einen den Schaft axial verschiebbar aufnehmende Hülse **2**. Die erfindungsgemäße Befestigerzusammensetzung ist dadurch gekennzeichnet, daß die Hülse **2** mindestens eine nach innen gebogene Lasche **3** aufweist, die eine Querschnittsverengung der Hülse **2** auf ein Maß bewirkt, das kleiner als der Außendurchmesser eines Schaftbereichs **5a, 10** ist. Die erfindungsgemäße Befestigerzusammensetzung erlaubt es, die beiden Elemente der Befestigerzusammensetzung unverlierbar vorzumontieren. Weiterhin besteht die Möglichkeit, die Hülse im Falle besonderer Einbaubedingungen zunächst ohne Schraube in ein Baugruppenteil vorzumontieren. Die Schraube kann dann nachträglich verliersicher in der Hülse montiert werden, ohne daß nachträglich mechanisch auf die Hülse eingewirkt werden muß.

## Beschreibung

Die Erfindung betrifft eine Befestigerzusammensetzung zum Verbinden eines ersten Werkstückes mit einer Bohrung und eines zweiten Werkstückes mit einer Bohrung, insbesondere einer Gewindebohrung.

Aus der DE 295 11 400 U1 ist eine Befestigerzusammensetzung nach dem Oberbegriff des Anspruchs 1 bekannt. Solche Befestigerzusammensetzungen werden beispielsweise zur Befestigung von Ventildeckeln an Zylinderköpfen von Verbrennungsmotoren eingesetzt. Die Befestigerzusammensetzung hat den Vorteil, daß sie am ersten Werkstück vormontiert werden kann. Bei der Montage des ersten Werkstücks am zweiten Werkstück ist die Befestigerzusammensetzung dadurch sicher am ersten Werkstück befestigt. Weder die gesamte Befestigerzusammensetzung noch die Schraube allein können bei der Montage aus dem ersten Werkstück herausgedrückt werden.

Zur Sicherung einer Schraube in einer Hülse weist die Hülse der aus dem Stand der Technik bekannten Befestigerzusammensetzung zwei einander diametral gegenüberliegende, radiale Öffnungen auf. Unterhalb des Flansches der Hülse sitzt auf der Hülse eine Durchführung aus einem elastomeren Material. Die Durchführung weist zwei nach innen verlaufende Vorsprünge auf, die durch die Öffnungen der Hülse hindurchtreten und in diese hineinragen. Die Schraube wird durch die in die Hülse hineinragenden Vorsprünge aus elastomerem Material in der Hülse gesichert.

Eine solche Befestigerzusammensetzung hat den Nachteil, daß sie aufwendig herzustellen ist. Die Durchführung aus elastomerem Material muß paßgenau hergestellt werden. Bei Fertigungstoleranzen wirkt sich dies nachteilig auf die Festigkeit der Verbindung der beiden Werkstücke aus. Außerdem muß die Schraube zur Vormontage der Befestigerzusammensetzung in die Hülse eingeschraubt werden, was zeitaufwendig ist.

Es ist Aufgabe der vorliegenden Erfindung, eine Befestigerzusammensetzung der eingangs genannten Art so fortzubilden, daß sie einfach und kostengünstig herzustellen und leicht vorzumontieren ist.

Erfindungsgemäß wird diese Aufgabe durch eine Befestigerzusammensetzung zum Verbinden eines ersten Werkstückes mit einer Bohrung mit einem zweiten Werkstück mit einer Bohrung, insbesondere einer Gewindebohrung, gelöst, wobei die Befestigerzusammensetzung eine Schraube umfaßt, die einen Kopf und einen Schaft aufweist, wobei der Schaft einen gewindelosen oberen Schaftabschnitt und einen unteren Schaftabschnitt mit einem Gewinde aufweist, und eine den Schaft axial verschiebbar aufnehmenden Hülse. Die erfindungsgemäße Befestigerzusammensetzung ist dadurch gekennzeichnet, daß die Hülse mindestens eine nach innen gebogene Lasche aufweist, die eine Querschnittsverengung der Hülse auf ein Maß bewirkt, das kleiner als der Außendurchmesser eines Schaftbereichs ist.

Die erfindungsgemäße Befestigerzusammensetzung besteht aus einer Schraube und einer die Schraube verschiebbar aufnehmenden Hülse. Die Schraube weist einen oberen, gewindelosen Bereich und einen unteren Bereich mit Gewinde auf. Das Gewinde kann radial über den oberen Schaftabschnitt vorstehen (Dünnschaftschraube). Die Hülse besitzt mindestens eine nach innen gebogene Lasche. Vorzugsweise werden drei Laschen verwendet. Die Laschen bewirken eine Querschnittsverengung der Hülse auf ein Maß, das kleiner ist als der Außendurchmesser eines Schaftbereichs der Schraube. Im Falle einer Dünnschaftschraube ist dieser Bereich der untere, gewindetragende Schaftabschnitt. Alternativ oder ergänzend kann die Schraube auch über einen Aufwurf oder eine Wulst am Schaft verfügen, der bzw. die gegenüber der durch die Laschen hervorgerufenen Querschnittsverengung einen größeren Durchmesser aufweist.

Dadurch wird erreicht, daß die Schraube in die Hülse eingeführt werden kann und unverlierbar mit der Hülse verbunden ist, sobald der Schraubenbereich größeren Durchmessers die Laschen passiert hat. Die Schraube ist - je nach Abmessungen des gewindelosen Bereichs - in gewissem Umfang verschiebbar innerhalb der Hülse. Die Schraube kann jedoch nicht aus der Hülse entfernt werden, ohne die Laschen nach außen zu biegen.

Die erfindungsgemäße Befestigerzusammensetzung kann auf verschiedene Weise vorteilhaft eingesetzt werden. Neben der Möglichkeit, die beiden Elemente der Befestigerzusammensetzung unverlierbar vorzumontieren, besteht auch die Möglichkeit, die Hülse aufgrund besonderer Einbaubedingungen zunächst ohne Schraube in ein Baugruppenteil, zum Beispiel einen Gehäusedeckel, vorzumontieren. Die Schraube kann dann nachträglich verliersicher in der Hülse montiert werden, ohne daß nachträglich mechanisch auf die Hülse eingewirkt werden muß. Die Schraube drückt die Laschen in der Hülse beim Einstecken mit ihrem Bereich größeren Durchmessers auseinander. Danach federn die Laschen zurück und verhindern mit einem Widerhaken-Effekt das Verlieren der Schraube. Die Schraube muß zur verliersicheren Vormontage in der Hülse nicht eingeschraubt werden. Es genügt, die Schraube unter leichtem Druck einzustecken.

Die Laschen sind vorzugsweise im oberen Bereich der Hülse angeordnet. Der unterhalb der Laschen verbleibende Bereich der Hülse kann in einer bevorzugten Ausführungsform etwa der Höhe des Schraubenabschnitts unter dem Bereich größeren Durchmessers entsprechen, also im Falle einer Dünnschaftschraube dem unteren, gewindetragenden Schaftabschnitt. Damit kann erreicht werden, daß die Schraube annähernd vollständig in die Hülse eintauchen kann. Ein erstes Werkstück, in dem die erfindungsgemäße Befestigerzusammensetzung vormontiert ist, kann dadurch auf das zweite Werkstück, an dem es befestigt werden soll, aufgelegt werden. Die Schrauben tauchen dabei so weit in die Hülsen ein, daß der annähernd paßgenaue Sitz des ersten Werkstücks erreicht wird. Die Schrauben können leicht in den entsprechenden Bohrungen zentriert werden. Damit wird der paßgenaue Sitz des ersten Werkstücks am zweiten Werkstück herbeigeführt. Die Verschraubung kann ohne weitere Probleme erfolgen.

Durch die Sicherung der Schraube innerhalb der Hülse wird verhindert, daß die Befestigungsschraube an schwierig zugänglichen Montagepositionen herausfallen kann. Gleichzeitig wird aber die Verschiebbarkeit der Schraube in der Hülse sichergestellt. Die leichte Montage des ersten Werkstücks am zweiten Werkstück wird ermöglicht. Eine Überkopfmontage ist ohne Probleme möglich, da die in den Hülsen vormontierten Schrauben nicht aus dem Werkstück herausfallen können.

Anstelle einer herkömmlichen Schraube mit Regelgewinde kann auch eine gewindefurchende Schraube eingesetzt werden. Die Bohrung am zweiten Werkstück muß dann kein Gewinde tragen.

Der durch die nach innen reichenden Laschen verbleibende Innendurchmesser der Hülse kann größer gewählt werden als der Außendurchmesser des gewindelosen Schraubenschaftes. Dadurch können Toleranzen bei der Montage überbrückt werden.

Die Erfindung wird im Folgenden anhand der beigefügten Abbildung näher erläutert:
- **Fig. 1**: zeigt eine erfindungsgemäße Befestigerzusammensetzung im Längsschnitt;
- **Fig. 2**: zeigt eine andere Ausführungsform einer erfindungsgemäßen Befestigerzusammensetzung im Längsschnitt;
- **Fig. 3**: zeigt eine erfindungsgemäße Befestigerzusammensetzung im Querschnitt.

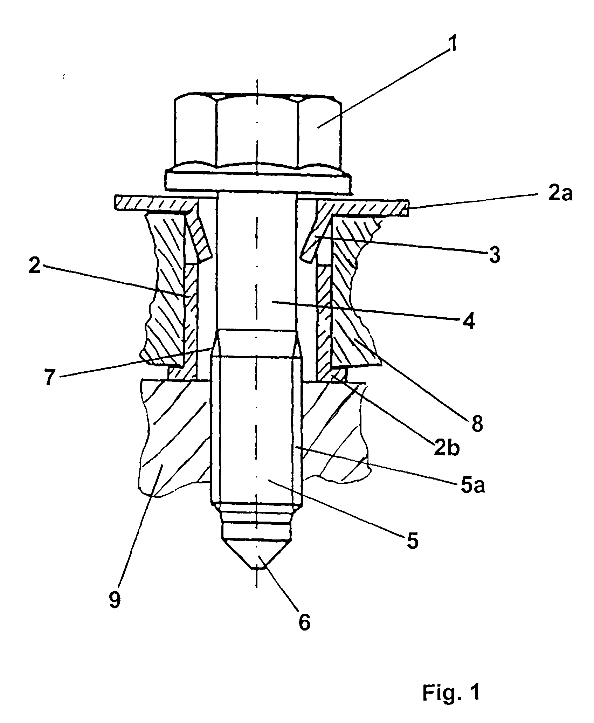

Die in **Fig. 1** dargestellte Befestigerzusammensetzung besteht aus einer Dünnschaftkopfschraube **1** und einer verliersicher aufgebrachten Hülse **2** mit einem kopf- und einem fußseitigen Flansch **2a, 2b.** Die Schraube verfügt über einen gewindelosen Schraubenschaft **4**, dessen Außendurchmesser kleiner als der Außendurchmesser des gewindetragenden Schraubenabschnittes **5** ist.

Die Hülse **2** verfügt über drei nach innen gebogenen Laschen **3,** die eine Querschnittsverengung in der Hülse verursachen. Die Querschnittsverengung ist größer als der Dünnschaftdurchmesser **4** aber kleiner als der Gewindeaußendurchmesser **5**. Die Hülse **2** mit den Laschen **3** stützt sich am Gewindeauslauf **7** ab. Die Hülse **2** kann nicht über das Gewinde **5a** abgestreift werden.

Die Schraube **1** verfügt zusätzlich über eine Suchspitze **6**.

Die erfindungsgemäße Befestigerzusammensetzung dient zum Verbinden eines ersten Werkstückes **8**, das mit einer Bohrung versehen ist, mit einem zweiten Werkstück **9**, das mit einer Gewindebohrung versehen ist. Beim Aufsetzen des ersten Werkstückes **8** auf das zweite Werkstück **9** taucht der Gewindeabschnitt **5** der Schraube annähernd vollständig in die Hülse **2** ein. Mit der Suchspitze **6** kann die Bohrung im zweiten Werkstück **9** leicht gefunden und das erste Werkstück **8** paßgenau ausgerichtet werden.

Das zweite Werkstück **9** muß nicht zwingend eine Bohrung mit bereits vorbereitetem Gewinde aufweisen. Es genügt eine gewindelose Bohrung, sofern die Schraube **1** eine gewindefurchende Schraube ist.

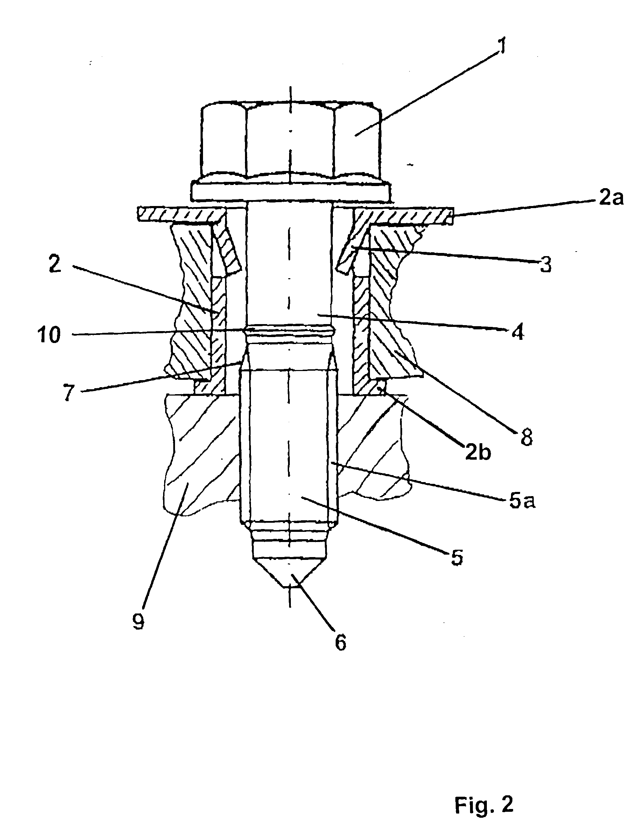

**Fig. 2** zeigt eine alternative Ausführungsform der Befestigerzusammensetzung gemäß Fig. 1. Die Schraube **1** verfügt im oberen Schaftbereich **4** über einen Aufwurf **10**, dessen Durchmesser größer als die durch die Laschen **3** bewirkte Querschnittsverengung in der Hülse **2** ist. Dadurch kann die Hülse **2** nicht über den Aufwurf **10** zurückgeschoben werden, sobald die Laschen **3** den Aufwurf **10** einmal passiert haben. Durch die Anordnung des Aufwurfs **10** kann vorgegeben werden, wie weit die Schraube **1** in die Hülse **2** eintauchen kann.

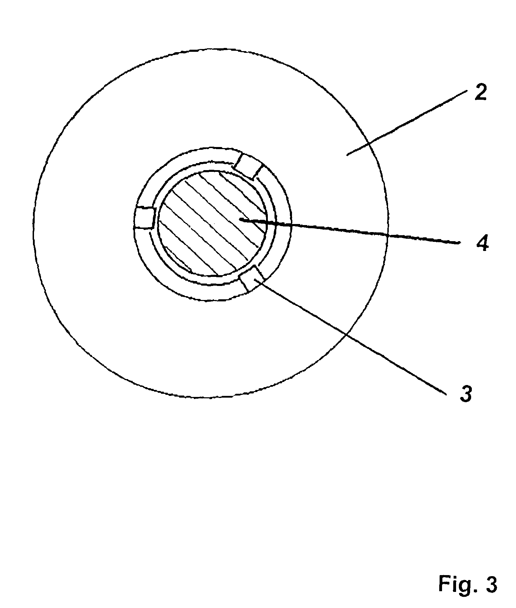

**Fig. 3** zeigt den Querschnitt durch eine erfindungsgemäße Befestigeranordnung im Höhe der Laschen **3**. Der Innendurchmesser der Hülse **2** wird durch die drei Laschen **3** verengt. Die Schraube weist am Schafts einen Abschnitt **4** auf, der einen geringfügig kleineren Durchmesser als die Querschnittsverengung der Hülse **2** hat. Die Hülse **2** ist in diesem Bereich verschiebbar auf der Schraube gehalten, läßt sich aber nicht über den in Fig. 3 nicht dargestellten Bereich größeren Durchmessers verschieben.

## Patentansprüche

1. Befestigerzusammensetzung zum Verbinden eines ersten Werkstückes (8) mit einer Bohrung mit einem zweiten Werkstück (9) mit einer Bohrung, insbesondere einer Gewindebohrung, wobei die Befestigerzusammensetzung eine Schraube (1) umfaßt, die einen Kopf und einen Schaft aufweist, wobei der Schaft einen gewindelosen oberen Schaftabschnitt (4) und einen unteren Schaftabschnitt (5) mit einem Gewinde (5a) aufweist, und eine den Schaft axial verschiebbar aufnehmenden Hülse (2), **dadurch gekennzeichnet**, daß die Hülse (2) mindestens eine nach innen gebogene Lasche (3) aufweist, die eine Querschnittsverengung der Hülse (2) auf ein Maß bewirkt, das kleiner als der Außendurchmesser eines Schaftbereichs (5a, 10) ist.

2. Befestigerzusammensetzung nach Anspruch 1, **dadurch gekennzeichnet**, daß das Gewinde (5a) des unteren Schaftabschnitts (5) radial über den oberen Schaftabschnitt (4) vorsteht.

3. Befestigerzusammensetzung nach Anspruch 1 oder 2, **dadurch gekennzeichnet**, daß der gegenüber der Querschnittsverengung größere Schaftbereich ein Aufwurf (10) oder eine Wulst (10) ist.

4. Befestigerzusammensetzung nach einem der Ansprüche 1 bis 3, **dadurch gekennzeichnet**, daß die Laschen (3) elastisch ausgebildet sind.

5. Befestigerzusammensetzung nach einem der Ansprüche 1 bis 4, **dadurch gekennzeichnet**, daß die Hülse (2) drei Laschen (3) aufweist.

6. Befestigerzusammensetzung nach einem der Ansprüche 1 bis 5, **dadurch gekennzeichnet**, daß die Laschen (3) im oberen Bereich der Hülse (2) angeordnet sind.

7. Befestigerzusammensetzung nach einem der Ansprüche 1 bis 6, **dadurch gekennzeichnet**, daß die Schraube (1) eine Suchspitze (6) aufweist.

8. Befestigerzusammensetzung nach einem der Ansprüche 1 bis 7, **dadurch gekennzeichnet**, daß die Schraube (1) eine gewindefurchende Schraube ist.

9. Befestigerzusammensetzung nach einem der Ansprüche 1 bis 8, **dadurch gekennzeichnet**, daß der unterhalb der Laschen (3) verbleibende Bereich der Hülse (2) etwa die gleiche Höhe wie der untere Schaftabschnitt (5) der Schraube (1) aufweist.

10. Befestigerzusammensetzung nach einem der Ansprüche 1 bis 9, **dadurch gekennzeichnet**, daß die Hülse kopf- und/oder fußseitig einen Flansch (2a, 2b) aufweist.
